# EUROPÄISCHE PATENTSCHRIFT

(11) **EP 3 911 475 B1**
(45) Veröffentlichungstag und Bekanntmachung des Hinweises auf die Patenterteilung: **07.12.2022**
(21) Anmeldenummer: 20700482.1
(22) Anmeldetag: 10.01.2020
(51) Int. Cl.: B25B 5/10, B23Q 1/00

(54) **SPANNVORRICHTUNG**
CLAMPING DEVICE
DISPOSITIF DE SERRAGE

(30) Priorität: 17.01.2019 AT 202019
(43) Veröffentlichungstag der Anmeldung: 24.11.2021
(73) Patentinhaber: cutpack.com GmbH, 6972 Fussach (AT)
(72) Erfinder: EGGER, Remo, 6942 Langenegg (AT)
(74) Vertreter: Torggler & Hofmann Patentanwälte - Rankweil
(86) Internationale Anmeldenummer: PCT/EP2020/050515
(87) Internationale Veröffentlichungsnummer: WO 2020/148178

(56) Entgegenhaltungen:
- WO-A1-2014/044390
- DE-A1- 10 216 003

## Beschreibung

Die Erfindung bezieht sich auf eine Spannvorrichtung zum Einspannen eines Einzugsnippels, umfassend ein Spannelement, welches von einem Antriebsmotor über ein Schraubgetriebe zwischen einer Offenstellung, in der der Einzugsnippel in eine Aufnahmeöffnung der Spannvorrichtung einführbar und aus dieser herausziehbar ist, und einer Spannstellung, in welcher der in die Aufnahmeöffnung eingeführte Einzugsnippel in dieser gehalten ist, axial verstellbar ist. Spannvorrichtungen, auch als Spannsysteme bezeichnet, dienen zum Fixieren eines Werkstücks, um dieses an einem Bearbeitungsplatz zu bearbeiten und/oder von einem Bearbeitungsplatz zum nächsten zu überführen. Bei einer Nullpunkt-Spannvorrichtung ist die Lage des Werkstücks hierbei in Bezug auf drei Achsen festgelegt. Auch Spannvorrichtungen, bei denen nur eine Festlegung in Bezug auf eine Achse ("Z-Fixierung") erfolgt, sind bekannt.

In einer herkömmlichen Ausbildung weist das Werkstück oder ein das Werkstück tragender Träger, meist als Palette bezeichnet, mindestens einen Einzugsnippel auf, der im geschlossenen Zustand der Spannvorrichtung in einer Aufnahmeöffnung der Spannvorrichtung gehalten ist. Hierzu weist der Einzugsnippel mindestens eine Ringnut auf, in welche im geschlossenen Zustand der Spannvorrichtung Eingriffselemente, beispielsweise Spannkugeln, eingreifen. Wenn hohe Spannkräfte gewünscht sind, müssen üblicherweise Hydraulikmotoren eingesetzt werden.

Eine Spannvorrichtung der eingangs genannten Art geht aus der WO 2014/044390 A1 hervor, welche den nächstliegenden Stand der Technik bildet. In einer Spannstellung eines Spannelements sind Spannkugeln in die Ringnut des in die Aufnahmeöffnung eingeführten Einzugsnippels eingedrückt und somit ist die Spannvorrichtung geschlossen. Zum Öffnen der Spannvorrichtung wird das Spannelement axial von der Spannstellung in eine Offenstellung verstellt, in welcher die Spannkugeln außer Eingriff mit der Ringnut gelangen können. Die axiale Verstellung des Spannelements zwischen der Spannstellung und der Offenstellung erfolgt mittels eines Antriebsmotors über ein Schraubgetriebe. Das Schraubgetriebe weist ein feststehendes äußeres Teil mit einem Innengewinde auf, welches von einem Gehäuseteil der Spannvorrichtung gebildet wird. Mit dem Innengewinde dieses äußeren Teils steht das Außengewinde eines inneren Teils des Schraubgetriebes in Eingriff, welches wiederum mit dem Spannelement in Verbindung steht. Das drehbare innere Teil des Schraubgetriebes wird vom Antriebsmotor über ein doppelstufiges Planetengetriebe angetrieben. Dieses Planetengetriebe muss somit mit dem drehbaren inneren Teil des Schraubgetriebes höhenverstellbar ausgebildet sein. Insgesamt führt dies zu einem komplizierten Aufbau. In Hinblick auf die auftretende Haft- sowie Gleitreibung ist eine Moment-und Drehzahlsteuerung des Antriebsmotors erforderlich. Die erreichbare Zykluszeit für einen kompletten Spann- und Lösvorgang ist relativ lang. Das Verhältnis der aufgebrachten Spannleistung zur eingebrachten Antriebsleistung des Antriebsmotors ist relativ gering.

Aufgabe der Erfindung ist es eine vorteilhafte Spannvorrichtung der eingangs genannten Art bereitzustellen, die eine hohe Spannkraft ermöglicht. Erfindungsgemäß gelingt dies durch eine Spannvorrichtung mit den Merkmalen des Anspruchs 1.

Die Spannvorrichtung gemäß der Erfindung weist eine Impulseinheit auf, welche ein mit dem Rotor des Antriebsmotors mechanisch gekoppeltes Drehteil besitzt. Vom Drehteil ist pro Umdrehung zumindest einmal ein Drehimpuls auf ein Impulsaufnahmeteil der Impulseinheit übertragbar, wodurch die axiale Verstellung des Spannelements über das Schraubgetriebe erfolgt. In einer vorteilhaften Ausführungsform der Erfindung ist das Drehteil in einem Aufnahmeraum des Impulsaufnahmeteils angeordnet. Das Impulsaufnahmeteil kann hierbei vorteilhafterweise direkt das drehbare Teil des Schraubgetriebes sein, also ein Gewinde, vorzugsweise Außengewinde, aufweisen, welches mit dem Gewinde, vorzugsweise Innengewinde, eines unverdrehbaren Teils des Schraubgetriebes in Eingriff steht. Das unverdrehbare Teil des Schraubgetriebes kann hierbei auch axial unverschiebbar sein, sodass das Impulsaufnahmeteil bei einer Drehung um die Längsmittelachse der Impulseinheit axial verstellt wird. Beim unverdrehbar und axial unverschiebbaren Teil des Schraubgetriebes handelt es sich vorzugsweise um ein Gehäuseteil der Spannvorrichtung. Denkbar und möglich wäre es aber auch, dass es sich beim drehbaren Teil des Schraubgetriebes um ein separates Teil handelt, welches mit dem Impulsaufnahmeteil mechanisch gekoppelt ist.

Die Drehimpulsübertragung auf das Impulsaufnahmeteil der Impulseinheit erfolgt also nicht kontinuierlich sondern intermittierend. Mit anderen Worten wird vom kontinuierlich angetriebenen Drehteil der Impulseinheit intermittierend ein Drehmoment auf das Impulsaufnahmeteil ausgeübt. Pro Umdrehung des Drehteils wird also mindestens einmal über einen Bereich des Drehwinkels des Drehteils, welcher kleiner als 90° ist, ein Drehmoment auf das Impulsaufnahmeteil ausgeübt, während über einen restlichen Bereich des Drehwinkels des Drehteils kein Drehmoment auf das Impulsaufnahmeteil ausgeübt wird.

Die Drehimpulsübertragung kann mechanisch über zwei aneinander anlaufende Anschlagflächen erfolgen. In einer bevorzugten Ausführungsform der Erfindung erfolgt die Drehimpulsübertragung aber hydraulisch.

Derartige Impulseinheiten werden herkömmlicherweise in Impulsschraubern oder Schlagschraubern eingesetzt. Impulsschrauber mit hydraulischer Drehimpulsübertragung gehen beispielsweise aus der EP 1 502 707 A2, DE 10 2007 045 695 A1 und EP 1 920 887 A1 hervor. Aus der DE 43 43 582 A1 geht ein Impulsschlagwerk insbesondere für einen Impulsschrauber hervor, wobei eine Drehimpulsübertragung vom Drehteil auf das Impulsaufnahmeteil mechanisch erfolgt. Das Impulsaufnahmeteil weist hierbei einen in einem Ölbad gegen die Kraft einer Rückstellfeder radial verschiebbaren Hubkolben auf, gegen welchen das Drehteil anläuft.

Durch die erfindungsgemäße Ausbildung kann in effektiver Weise eine sehr hohe Spannkraft aufgebracht werden. Zum Aufbringen einer hohen Spannkraft ist hierbei nicht notwendigerweise ein Hydraulikmotor als Antriebsmotor erforderlich, sondern eine solche kann auch mit einem elektrischen Antriebsmotor erreicht werden.

In einer vorteilhaften Ausführungsform der Erfindung ist der Rotor des Antriebsmotors mit dem Drehteil der Impulseinheit axial unverschiebbar verbunden und gegenüber dem Stator des Antriebsmotors axial verschiebbar. Es wird dadurch eine einfache aber dennoch robuste Ausbildung ermöglicht. Insbesondere kann es sich beim Antriebsmotor um einen elektrischen Außenläufermotor handeln. Ein solcher kann vorzugsweise bürstenlos ausgebildet sein. Der Rotor kann hierbei günstigerweise Permanentmagneten aufweisen. Vorzugsweise weisen diese eine größere axiale Ausdehnung als die Spulen des Stators auf. Es wird damit ermöglicht, dass Abschnitte der Permanentmagneten über die volle axiale Ausdehnung der Spulen des Stators diesem gegenüberliegen, und zwar in unterschiedlichen axialen Stellungen des Rotors.

Die Verbindung des Drehteils der Impulseinheit mit dem Rotor des Antriebsmotors erfolgt vorzugsweise unmittelbar über eine vom Rotor des Antriebsmotors angetriebene Antriebswelle. Diese kann beispielsweise am Drehteil der Impulseinheit angeformt sein oder an dieser starr befestigt sein und in einer Öffnung des Rotors aufgenommen sein. Auch eine Anformung oder Befestigung der Antriebswelle am Rotor und Aufnahme in einer Öffnung des Drehteils ist denkbar und möglich. Die Antriebswelle weist hierbei jeweils eine von der Kreisform abweichende Querschnittsform auf und die die Antriebswelle aufnehmende Öffnung weist eine korrespondierende Querschnittsform auf.

Vorteilhafterweise weist die Spannvorrichtung einen Sensor zur Erfassung der axialen Lage des Drehteils der Impulseinheit auf. Insbesondere kann hierzu ein Endschalter vorgesehen sein, der von einem mit der das Drehteil antreibenden Antriebswelle verbundenen Teil oder auch vom Ende der Antriebswelle selbst betätigbar ist.

Weitere Vorteile und Einzelheiten der Erfindung werden im Folgenden anhand der beiliegenden Zeichnung erläutert. In dieser zeigen:
- Fig. 1: und 2 eine Draufsicht und eine Seitenansicht einer Spannvorrichtung gemäß einem Ausführungsbeispiel der Erfindung mit in die Aufnahmeöffnung eingesetztem Einzugsnippel, im geöffneten Zustand der Spannvorrichtung, also in der Offenstellung des Spannelements;
- Fig. 3: einen Schnitt entlang der Linie AA von Fig. 1;
- Fig. 4: einen Schnitt analog Fig. 3, aber in einer Zwischenstellung des Spannelements;
- Fig. 5: einen Schnitt analog Fig. 3, aber im geschlossenen Zustand der Spannvorrichtung, also in der Spannstellung des Spannelements;
- Fig. 6: einen Schnitt analog Fig. 3, aber ohne den Einzugsnippel und in einer Endlage des Spannelements;
- Fig. 7: einen Schnitt entlang der Linie BB von Fig. 2;
- Fig. 8: eine geschnittene Explosionsdarstellung;
- Fig. 9: einen Schnitt entsprechend Fig. 5 für eine etwas modifizierte Ausführung;
- Fig. 10: einen Schnitt entsprechend Fig. 6 eines weiteren Ausführungsbeispiels der Erfindung;
- Fig. 11: einen Schnitt entlang der Linie CC von Fig. 10.

Die Figuren weisen unterschiedliche Maßstäbe auf.

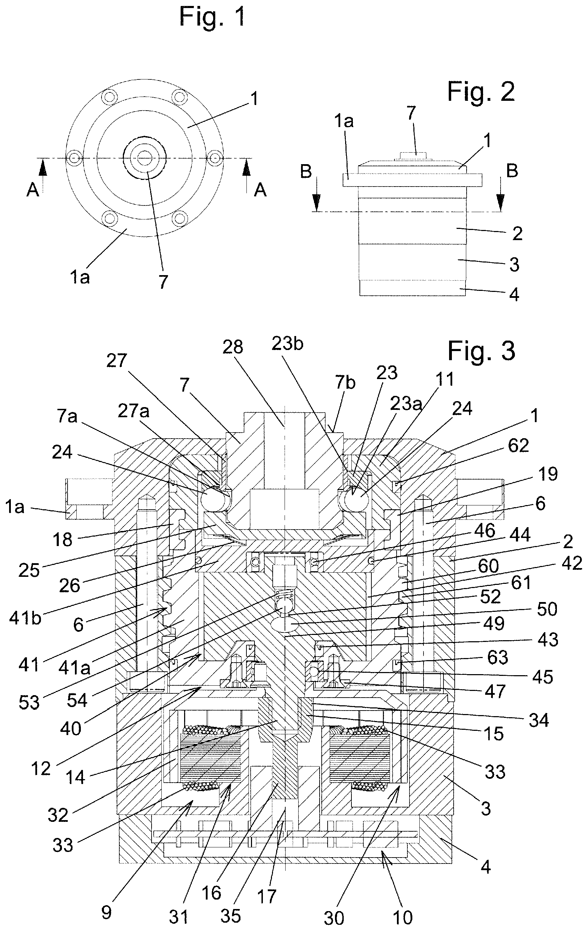

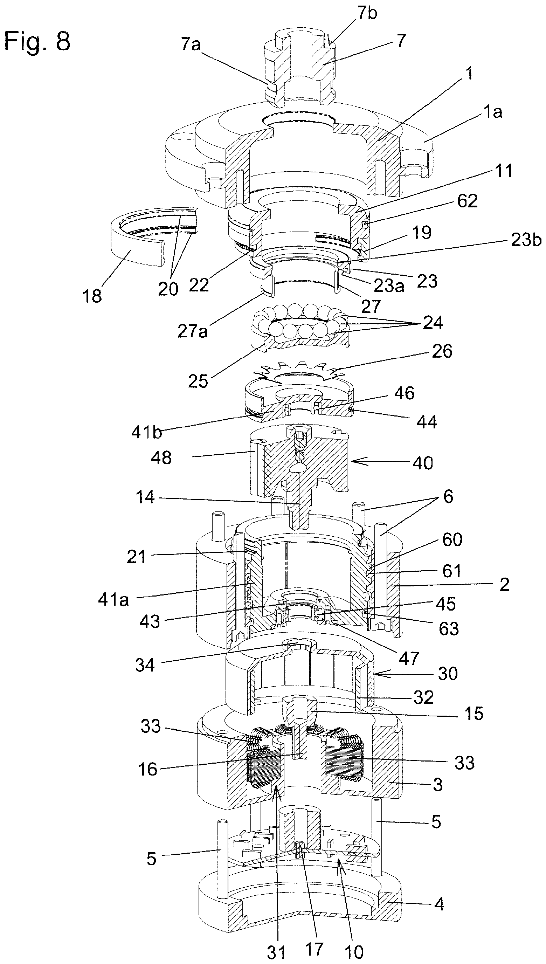

Ein Ausführungsbeispiel einer Spannvorrichtung gemäß der Erfindung ist in den Fig. 1 bis 8 dargestellt, teilweise vereinfacht.

Die Spannvorrichtung weist ein Gehäuse auf, welches von mehreren Gehäuseteilen gebildet wird, im Ausführungsbeispiel von vier Gehäuseteilen 1-4, die durch Schrauben 5, 6 miteinander verbunden sind.

Ein Einzugsnippel 7 ist durch eine Öffnung im Gehäuseteil 1 in eine Aufnahmeöffnung 8 der Spannvorrichtung einführbar und in dieser verspannbar, wie im Folgenden erläutert werden wird.

Das Gehäuseteil 1 kann mittels eines Schraubflansches 1a an einem anderen Maschinenteil befestigt werden.

Zum Schließen und Öffnen der Spannvorrichtung dient ein elektrischer Antriebsmotor 9, der einen Stator 30 und einen um die Längsmittelachse 35 des Antriebsmotors 9 drehbaren Rotor 31 umfasst. Die Ansteuerung des Antriebsmotors 9 erfolgt durch eine elektronische Steuereinheit 10. Eine im Gehäuseteil 4 gehaltene mit elektronischen Bauelementen bestückte Platine ist hiervon schematisch angedeutet.

Der Antriebsmotor ist im Ausführungsbeispiel in Form eines bürstenlosen Außenläufermotors ausgebildet, wobei der Rotor 31 mit Permanentmagneten 32 ausgestattet ist. Der Stator 30 ist integral mit dem Gehäuseteil 3 ausgebildet. Hierzu ist der Außenmantel des Gehäuseteils 3 über einen Verbindungssteg mit einem zylindrischen Innenteil verbunden, welches die Spulen 33 des Stators 30 trägt.

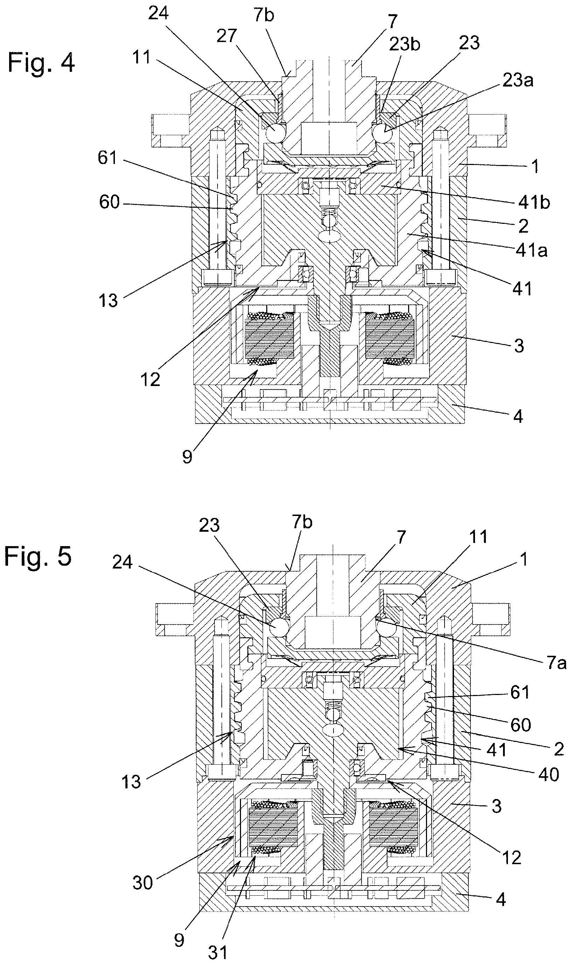

Der Antriebsmotor 9 dient zur axialen Verstellung eines Spannelements 11 zwischen einer Offenstellung, in der die Spannvorrichtung geöffnet ist, vgl. Fig. 3, und einer Spannstellung, in der die Spannvorrichtung geschlossen ist und der Einzugsnippel in der Aufnahmeöffnung 8 verspannt ist, vgl. Fig. 5. Die axiale Verstellung des Spannelements 11 erfolgt über eine Impulseinheit 12 und ein Schraubgetriebe 13.

Die Impulseinheit 12 weist ein um eine Längsmittelachse 49 der Impulseinheit 12 drehbares Drehteil 40 auf, welches mit dem Rotor 31 des Antriebsmotors 9 mechanisch gekoppelt ist. Das Drehteil 40 wird also bei einer Drehung des Rotors 31 des Antriebsmotors 9 kontinuierlich um die Längsmittelachse 49 gedreht, wobei die Längsmittelachse 49 der Impulseinheit 12 und die Längsmittelachse 35 des Antriebsmotors 9 im Ausführungsbeispiel auf einer gemeinsamen Geraden liegen, wie dies bevorzugt ist.

Im Ausführungsbeispiel erfolgt die mechanische Verbindung zwischen dem Rotor 31 des Antriebsmotors 9 und dem Drehteil 40 der Impulseinheit 12 direkt über eine Antriebswelle 14, welche am Drehteil 40 angeformt ist. Die Antriebswelle 14 weist in einem Abschnitt eine von der Kreisform abweichende Kontur auf und ragt mit diesem Abschnitt in eine eine korrespondierende Kontur aufweisende Öffnung 34 des Rotors 31. Der auf der anderen Seite der Öffnung 34 aus dem Rotor 31 herausragende Abschnitt der Antriebswelle 14 weist ein Außengewinde auf. Auf dieses ist eine Mutter 15 mit einem angeformten Auslösestift 16 für einen Endschalter 17 aufgeschraubt.

Die Impulseinheit 12 weist im Weiteren ein Impulsaufnahmeteil 41 auf, welches ebenfalls um die Längsmittelachse 49 drehbar ist. Dieses Impulsaufnahmeteil 41 besitzt einen abgedichteten Aufnahmeraum 42, in welchem das Drehteil 40 aufgenommen ist. Im Übrigen ist der Aufnahmeraum 42 mit einer in den Figuren nicht gesondert dargestellten Hydraulikflüssigkeit befüllt.

Im Ausführungsbeispiel umfasst das Impulsaufnahmeteil 41 ein topfförmiges Basisteil 41a und einen Deckel 41b. Der Boden des Basisteils 41a weist eine Öffnung auf, durch welche die Antriebswelle 14 mittels einer Dichtung 43 abgedichtet durchgeführt ist. Der Deckel 41b ist gegenüber dem Basisteil 41a ebenfalls mittels einer Dichtung 44 abgedichtet. Im Bereich der Öffnung des Bodens des Basisteils 41a und in einer Vertiefung im Deckel 41b sind im Weiteren Kugellager 45, 46 angeordnet, mittels denen das Drehteil 40 drehbar gelagert ist. Das Kugellager 45 umgibt die Antriebswelle 14, das Kugellager 46 umgibt einen zapfenförmigen Fortsatz des Drehteils 40. Ein am Boden angeschraubter Haltering 47 dient zur Halterung des Kugellagers 45 im Boden des Basisteils 41a.

Das Impulsaufnahmeteil 41 könnte auch modifiziert ausgebildet sein. So könnte ein topfförmiges Teil vorgesehen sein, welches den Mantel und den Deckel des Impulsaufnahmeteils bildet und das durch einen separaten Boden verschlossen ist, welcher gegenüber dem topfförmigen Teil abgedichtet ist und welches die Öffnung zum Durchtritt der Antriebswelle 14 aufweist.

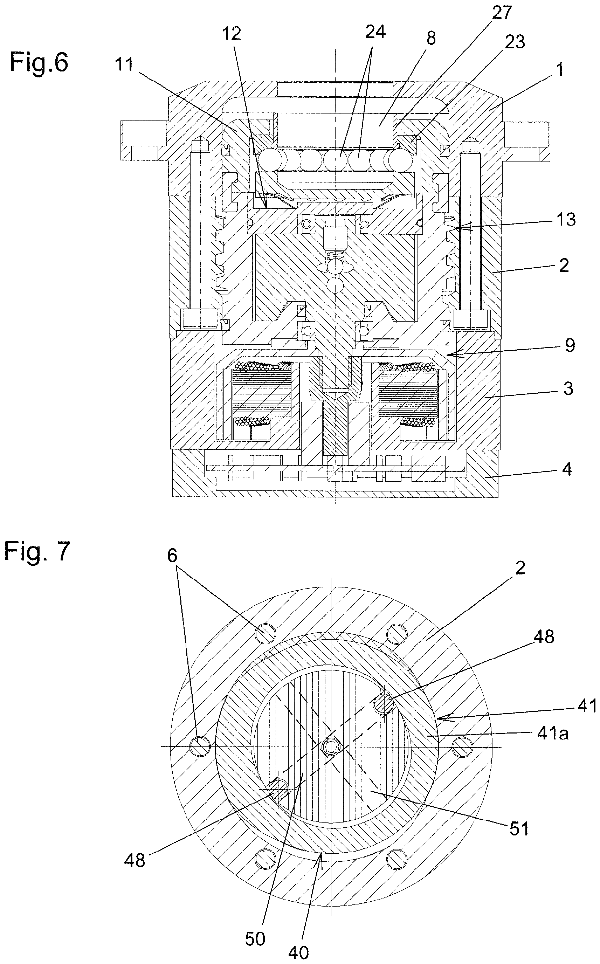

Wie dies von Impulsschraubern her bekannt ist, ist der Aufnahmeraum 42 im Querschnitt gesehen (Fig. 7) nicht kreisförmig begrenzt sondern gegenüber der Kreisform in eine Richtung etwas längs erstreckt (oval). Das Drehteil weist eine kreisförmige Außenkontur auf. Über den Umfang des Drehteils 40 liegt somit ein unterschiedlich breiter Spalt zwischen dem Drehteil 40 und dem Impulsaufnahmeteil 41 vor, vgl. Fig. 7. An zwei gegenüberliegenden Stellen des Impulsaufnahmeteils besitzt der Spalt seine kleinste Breite und an zwei demgegenüber um 90° beabstandeten Stellen besitzt der Spalt seine größte Breite, vgl. Fig. 7. An zwei gegenüberliegenden Stellen des Drehteils 40 wird der Spalt zwischen dem Drehteil 40 und dem Impulsaufnahmeteil 41 jeweils durch ein Dichtelement 48 überbrückt, d.h. das Drehteil 40 ist an diesen gegenüberliegenden Stellen gegenüber der den Aufnahmeraum 42 begrenzenden Wand des Impulsaufnahmeteils 41 zumindest weitgehend abgedichtet. Die Dichtelemente 48 können beispielsweise von zylindrischen Körpern gebildet werden, die in Nuten im Mantel des Drehteils 40 angeordnet sind. Durch die Drehung des Drehteils 40 werden diese zylindrischen Körper gegen die Wand des Impulsaufnahmeteils 41 gedrückt.

Außerdem sind im Drehteil 40 Kanäle 50, 51 angeordnet, welche zur Übertragung der Hydraulikflüssigkeit zwischen den von den Dichtelementen 48 abgedichteten Spalträumen dienen. Diese Kanäle 50, 51 sind in Fig. 7 durch gestrichelte Linien angedeutet und verlaufen in unterschiedlichen Höhen im Drehteil 40. Der Kanal 50 verläuft zwischen den Nuten, in denen die Dichtelemente 48 angeordnet sind. Der Kanal 51 verläuft rechtwinkelig hierzu. Die Kanäle 50, 51 sind durch einen axial verlaufenden Verbindungskanal 52, vgl. z.B. Fig. 3, miteinander verbunden. Der Verbindungskanal ist hierbei durch einen von einer Feder 53 beaufschlagten, vorzugsweise kugelförmigen, Verschlusskörper 54 verschlossen. Bei einer Überschreitung eines Schwellenwerts des Drucks der Hydraulikflüssigkeit im Kanal 50, kann die Hydraulikflüssigkeit unter Anhebung des Verschlusskörpers 54 in den Kanal 51 strömen. Das ausgeübte Drehmoment hängt von der Vorspannung der Feder 53 ab. Die Vorspannung der Feder kann mittels einer Stellschraube verstellbar ausgebildet sein. Anstelle eines von einer Feder 53 beaufschlagten Verschlusskörpers 54 könnte beispielsweise auch vorgesehen sein, den Verbindungskanal 52 mit einem entsprechend kleinen Durchflussquerschnitt auszubilden, sodass dieser als Drossel wirkt.

Bei der Drehung des Drehteils 40 wird die im Spalt zwischen dem Drehteil 40 und dem Impulsaufnahmeteil 41 sich befindende Hydraulikflüssigkeit somit, wenn das jeweilige Dichtelement 48 das Ende des oval ausgebuchteten Bereichs des Impulsaufnahmeteils 41 erreicht, jeweils druckbeaufschlagt, wobei zumindest nach Überschreiten eines Schwellenwerts des Drucks Hydraulikflüssigkeit durch einen Spalt zwischen dem Dichtelement 48 und dem Drehteil 40 in den Kanal 50 und weiter über den Verbindungskanal 51 in den Kanal 51 und von dort in einen der nicht druckbeaufschlagten Spalträume zwischen dem Drehteil 40 und dem Impulsaufnahmeteil 41strömen kann.

Bei der Drehung des Drehteils 40 durch den Antriebsmotor 9, um das Spannelement 11 zu verstellen, kommt es damit bei jeder Umdrehung des Drehteils 40 im Ausführungsbeispiel zweimal zu einer Ausübung eines Drehmoments vom Drehteil 40 auf das Impulsaufnahmeteil 41 und hierbei zu einer Drehimpulsübertragung vom Drehteil 40 auf das Impulsaufnahmeteil 41.

Es könnte beispielsweise auch nur ein am Drehteil angeordnetes Dichtelement zur Abdichtung des Spaltes zwischen dem Drehteil 40 und dem Impulsaufnahmeteil 41 vorgesehen sein, sodass es pro Umdrehung nur einmal zu einer Drehimpulsübertragung kommt, oder mehr als zwei solche Dichtelemente könnten vorgesehen sein, sodass es pro Umdrehung zu einer entsprechenden Anzahl von Drehimpulsübertragungen kommt.

Durch die wiederholte Drehimpulsübertragung auf das Impulsaufnahmeteil 41 wird dieses um die Längsmittelachse 49 der Impulseinheit 12 gedreht, um das Spannelement 11 zwischen der Offenstellung und der Spannstellung zu verstellen. Die Drehbewegung des Impulsaufnahmeteils 41 wird hierbei durch das Schraubgetriebe 13 in eine axiale Bewegung umgewandelt, also in eine Bewegung parallel zur Längsmittelachse des Schraubgetriebes 13, wobei die Längsmittelachse des Schraubgetriebes 13 mit der Längsmittelachse 49 der Impulseinheit 12 zusammenfällt (= auf einer gemeinsamen Geraden liegt). Im Ausführungsbeispiel ist hierzu das Impulsaufnahmeteil 41 selbst mit einem Außengewinde 60 versehen, welches mit einem Innengewinde 61 des Gehäuseteils 13 zusammenwirkt. Das Innengewinde 61 des Gehäuseteils 13 führt die Drehung des Impulsaufnahmeteils 41 um die Längsmittelachse 49. Damit hält das Innengewinde 61 auch das Drehteil 40 konzentrisch zur Längsmittelachse 49 der Impulseinheit 12. Im Ausführungsbeispiel wird dadurch weiters auch der Rotor 31 konzentrisch zur Längsmittelachse 35 des Antriebsmotors 9 gehalten, wobei auch eine andere Ausbildung möglich ist.

Beispielsweise kann das das Innengewinde 61 aufweisende Gehäuseteil 13 aus Bronze ausgebildet sein, um gute Gleiteigenschaften zu dem aus Stahl bestehenden Impulsaufnahmeteil 41 auszubilden.

Im Ausführungsbeispiel ist somit das in Drehung versetzte Teil des Schraubgetriebes 13 gleichzeitig das durch die Drehbewegung axial (= parallel zur Längsmittelachse 49) verschobene Teil.

Wie bereits erwähnt ist das Drehteil 40 der Impulseinheit 12 axial unverschiebbar (bezogen auf die Längsmittelachse 49 der Impulseinheit 12 bzw. die Längsmittelachse 35 des Antriebsmotors 9) mit dem Rotor 31 des Antriebsmotors 9 verbunden. Bei einer axialen Verstellung des Impulsaufnahmeteils 41 bewegt sich der Rotor 31 somit gegenüber dem Stator 30 in axialer Richtung (= parallel zur Längsmittelachse 35). Damit in allen axialen Stellungen des Rotors 31 relativ zum Stator 30 Abschnitte der Permanentmagneten 32 des Rotors 31 den Spulen 33 des Stators 30 axial gegenüberliegen, weisen die Permanentmagneten 32 eine größere axiale Erstreckung als die Spulen 33 auf, vgl. Fig. 3-6.

Durch die durch das Schraubgetriebe 13 hervorgerufene axiale Bewegung des Impulsaufnahmeteils 41 erfolgt das Öffnen und Schließen der Spannvorrichtung. Das Impulsaufnahmeteil 41 ist hierzu axial unverschiebbar mit dem Spannelement 11 verbunden. Im Ausführungsbeispiel sind hierzu zwei Halbringe 18, 19 vorgesehen, welche jeweils zwei axial beabstandete, vorspringende Stege 20 aufweist. Von den Stegen 20 eines jeweiligen Halbrings 18, 19 greift einer in eine Nut 21 an der Außenseite des Basisteils 41a des Impulsaufnahmeteils 41 und der andere in eine Nut 22 an der Außenseite des Spannelements 11 ein. Modifizierte Ausbildungen sind denkbar und möglich. So wäre beispielsweise auch eine einteilige Ausbildung des Impulsaufnahmeteils 41 mit dem Spannelement 11 denkbar und möglich.

Zum Schließen der Spannvorrichtung wird vom Spannelement 11, das im Ausführungsbeispiel als Zughülse ausgebildet ist, ein Spannring 23 gegen Spannkugeln 24 gezogen. Der Spannring 23 wird also vom Spannelement 11 axial in Richtung zu den Spannkugeln 24 verschoben. Der Spannring 23 weist hierbei eine mit den Spannkugeln 24 zusammenwirkende Schrägfläche 23a auf. Wenn der Spannring 23 mit der Schrägfläche 23a gegen die Spannkugeln 24 gezogen wird, werden die Spannkugeln 24 radial nach innen in eine Ringnut 7a des Einzugsnippels 7 gedrückt. Die Spannkugeln 24 bilden also Eingriffselemente, die mit der Ringnut 7a des Einzugsnippels 7 zusammenwirken, um den Einzugsnippel 7 in der Aufnahmeöffnung 8 zu fixieren.

Die Spannkugeln 24 liegen auf einer zwischen den Spannkugeln 24 und dem Impulsaufnahmeteil 41 angeordneten Auflagescheibe 25 auf. Zwischen der Auflagescheibe 25 und dem Impulsaufnahmeteil 41 ist eine Feder 26 angeordnet, welche auf die Auflagescheibe 25 eine in Richtung zu den Spannkugeln 24 wirkende Vorspannkraft ausübt. Die Feder 26 ist hier nach Art einer Tellerfeder ausgebildet.

Die Feder 26 stützt sich am Deckel 41b des Impulsaufnahmeteils 41 ab.

Auf der vom Antriebsmotor 9 abgewandten Seite der Spannkugeln 24 ist im Weiteren ein Öffnungsring 27 angeordnet. Dieser erstreckt sich über einen den Spannkugeln 24 zugewandten Endabschnitt radial innerhalb des Spannrings 23. Der Öffnungsring 27 wirkt hierbei mit den Spannkugeln 24 radial innerhalb der Stelle zusammen, an welcher sie bezogen auf die axiale Richtung der Spannvorrichtung ihre größte Ausdehnung aufweisen.

Im geöffneten Zustand der Spannvorrichtung wird der Öffnungsring 27 gegen die Innenseite des Gehäuseteils 1 im die Öffnung im Gehäuseteil 1 umgebenden Bereich gedrückt, und zwar durch die Kraft der Feder 26, die über die Auflagescheibe 25 und die Spannkugeln 24 auf den Öffnungsring 27 wirkt. Zwischen der Auflagescheibe 25 und dem Deckel 41b kann hierbei ein geringfügiger Spalt vorliegen. Die Spannkugeln 24 werden dadurch vom Öffnungsring 27 radial nach außen gedrückt, also aus der Ringnut 7a des Einzugsnippels 7 heraus, vgl. Fig. 3. In dieser Stellung kann der Einzugsnippel 7 durch die Öffnung im Gehäuseteil 1 in die Aufnahmeöffnung 8 eingeführt werden und aus dieser herausgezogen werden, und zwar parallel zur Längsmittelachse 28 der Aufnahmeöffnung 8. Die Längsmittelachse 28 der Aufnahmeöffnung 8 liegt mit der Längsmittelachse 49 der Impulseinheit 12 auf einer gemeinsamen Geraden, wie dies bevorzugt ist.

Um den Einzugsnippel 7 in der Aufnahmeöffnung zu klemmen, wird der Einzugsnippel 7 in der Offenstellung des Spannelements 11 zunächst in die Aufnahmeöffnung 8 eingeführt, bis er an der Auflagescheibe 25 anliegt, wie dies in Fig. 3 dargestellt ist.

In der Folge wird das Spannelement 11 mittels des Antriebsmotors 9 über die Impulseinheit 12 und das Schraubgetriebe 13 von der Offenstellung in Richtung zur Spannstellung axial verstellt (= parallel zur Längsmittelachse 28 der Aufnahmeöffnung 8 verschoben).

In Fig. 4 ist eine Zwischenstellung dargestellt. Beim Verfahren des Spannelements 11 ausgehend von dessen Offenstellung in Richtung von dessen Spannstellung wird der Spannring 23 gegen die Spannkugeln 24 gezogen. Da die Spannkugeln 24 gleichzeitig von der Öffnung im Gehäuseteil 1 weggezogen werden, wird die auf den Öffnungsring 27 wirkende Anpresskraft an das Gehäuseteil 1 aufgehoben und dieser kann sich vom Gehäuseteil 1 abheben. Durch die Schrägfläche 23a des Spannrings 23 werden die Spannkugeln 24 nach innen gedrückt, in die Ringnut 7a des Einzugsnippels 7. Der Abstand zwischen dem Spannring 23 und der Auflagescheibe 25 verringert sich hierbei ein wenig, sodass sich die Auflagescheibe 25 auch etwas vom Deckel 41b abheben kann, vgl. Fig. 4. Fig. 4 zeigt gerade die Stellung des Spannelements 11, bei welcher die Spannkugeln 24 in die Ringnut 7a eingedrückt sind und am unteren (= von der Öffnung im Gehäuseteil 1 abgelegenen) Rand der Ringnut 7a anliegen. Bei der weiteren Verstellung des Spannelements 11 in Richtung zur Spannstellung wird der Einzugsnippel 7 somit von den Spannkugeln 24 mitgenommen und axial verstellt, wobei er weiter in die Aufnahmeöffnung 8 hineingezogen wird. Der geschlossene Zustand der Spannvorrichtung ist in Fig. 5 dargestellt, in welcher sich das Spannelement 11 in der Spannstellung befindet. Der Einzugsnippel 7 ist gerade so weit in die Aufnahmeöffnung 8 hineingezogen worden, dass die rechtwinkelig zur Längsmittelachse 28 der Aufnahmeöffnung 8 liegende Stufenfläche 7b, bei welcher der Einzugsnippel 7 eine Abstufung seines Durchmessers zu einem kleineren Durchmesser aufweist, bündig mit der ebenfalls rechtwinkelig zur Längsmittelachse 28 der Aufnahmeöffnung 8 liegenden äußeren Oberfläche des Gehäuseteils 1 liegt. Der Einzugsnippel 7 ist ja an einem zu bearbeitenden Werkstück oder einem Träger für ein zu bearbeitendes Werkstück (=Werkstückpalette) angebracht. Dieses Werkstück bzw. dieser Träger ist in den Figuren nicht dargestellt, liegt aber auf der Stufenfläche 7b auf und erstreckt sich eben von dieser nach außen. Das weitere Einziehen des Einzugsnippels 7 ist also bei der in Fig. 5 dargestellten Spannstellung des Spannelements 11 durch die an der Außenseite des Gehäuseteils 1 anliegende Oberfläche des Werkstücks bzw. Trägers für ein Werkstück, an welchem der Einzugsnippel 7 befestigt ist, gesperrt. Damit ist der Einzugsnippel 7 mit einer hohen Spannkraft in einer definierten Lage bezüglich der axialen Richtung der Spannvorrichtung (= Richtung der Längsmittelachse 28 der Aufnahmeöffnung 8, auch als "z-Richtung" bezeichnet) gehalten.

Zwischen dem Einzugsnippel 7 und der Öffnung im Gehäuseteil 1 liegt im geschlossenen Zustand der Spannvorrichtung eine enge Passung, vorzugsweise Presspassung, vor, sodass die Lage des Einzugsnippels 7 auch in Bezug auf zwei senkrecht zueinander stehende Richtungen, die rechtwinkelig zur axialen Richtung der Spannvorrichtung liegen, definiert ist. Es wird auf diese Weise eine Nullpunkt-Spannvorrichtung (=Nullpunktspannsystem) realisiert.

Der Öffnungsring 27 dient auch zum Verhindern eines Herausfallens der Spannkugeln 24 radial nach innen, wenn das Spannelement 11 ohne eingeführten Einzugsnippel 7 von der Offenstellung in die Spannstellung und darüber hinaus verschoben wird. Der Öffnungsring 27 weist hierzu einen radial nach außen abstehenden ringförmigen Vorsprung 27a auf, der zum Zusammenwirken mit einer Schulter 23b des Spannrings 23 vorgesehen ist. In der Offenstellung des Spannelements 11 ist die Schulter 23b des Spannrings 23 vom Vorsprung 27a des Öffnungsrings 27 abgehoben, vgl. Fig. 3. Beim Verfahren des Spannelements 11 in Richtung von dessen Spannstellung gelangt der Vorsprung 27a des Öffnungsrings 27 in Anlage an die Schulter 23b des Spannrings 23. In der Folge wird der Öffnungsring 27 vom Spannring 23 mitgenommen, vgl. Fig. 4 und 5. In dieser Stellung ist der Abstand zwischen dem Öffnungsring 27 und der Auflagescheibe 25 immer noch etwas geringer als der Durchmesser der Spannkugeln 24.

Fig. 6 zeigt den Zustand der Spannvorrichtung, in welcher das Spannelement 11 über die Spannstellung hinaus in seine der Offenstellung entgegengesetzte Endlage verfahren ist, und zwar ohne in die Aufnahmeöffnung 8 eingesetzten Einzugsnippel 7. Diese Endlage ist durch Ansprechen des Endschalters 17 vorgegeben. Das Anfahren dieser Endlage dient als Referenzfahrt für die Steuerung der Spannvorrichtung durch die Steuereinheit 10.

Beidseitig der Gewinde 60, 61 des Schraubgetriebes 13 sind Dichtungen 62, 63 angeordnet, um ein Eindringen von Schmutz in das Schraubgetriebe zu verhindern.

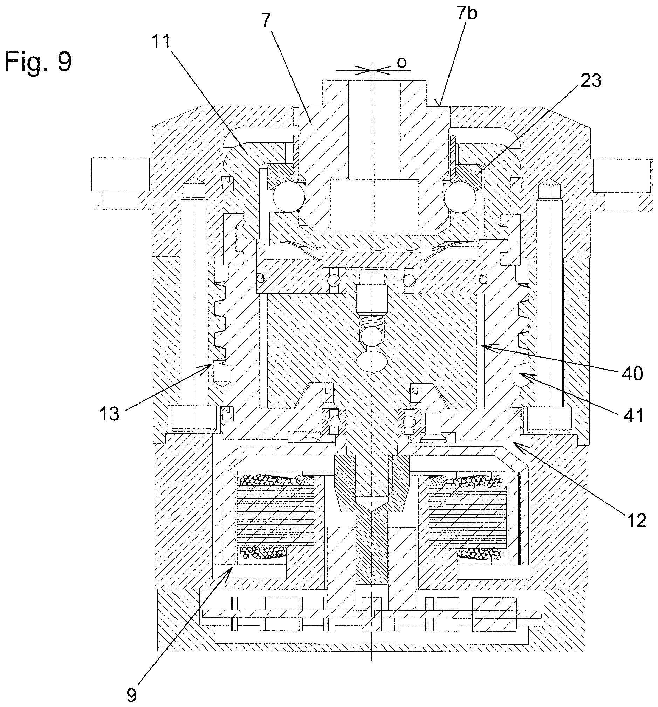

Fig. 9 zeigt eine Modifikation des in den Fig. 1 bis 8 dargestellten Ausführungsbeispiels dahingehend, dass der Einzugsnippel 7 bezüglich der Ausrichtung rechtwinkelig zur axialen Richtung einen Spielraum aufweist, d.h. in x-und y-Richtung etwas verstellbar ist. Es ist hierzu ausreichend, die Öffnung im Gehäuseteil 1 entsprechend größer als den Durchmesser des Einzugsnippels 7 auszubilden. Entsprechend der Lage des Einzugsnippels rechtwinkelig zur axialen Richtung kann sich hierbei die Einheit umfassend den Spannring 23, den Öffnungsring 27, die Spannkugeln 24 und die Auflagescheibe 25, gegebenenfalls auch die Feder 26, gegenüber dem Spannelement 11 und dem Impulsaufnahmeteil 41 in Richtung rechtwinkelig zur axialen Richtung verschieben (Offset o).

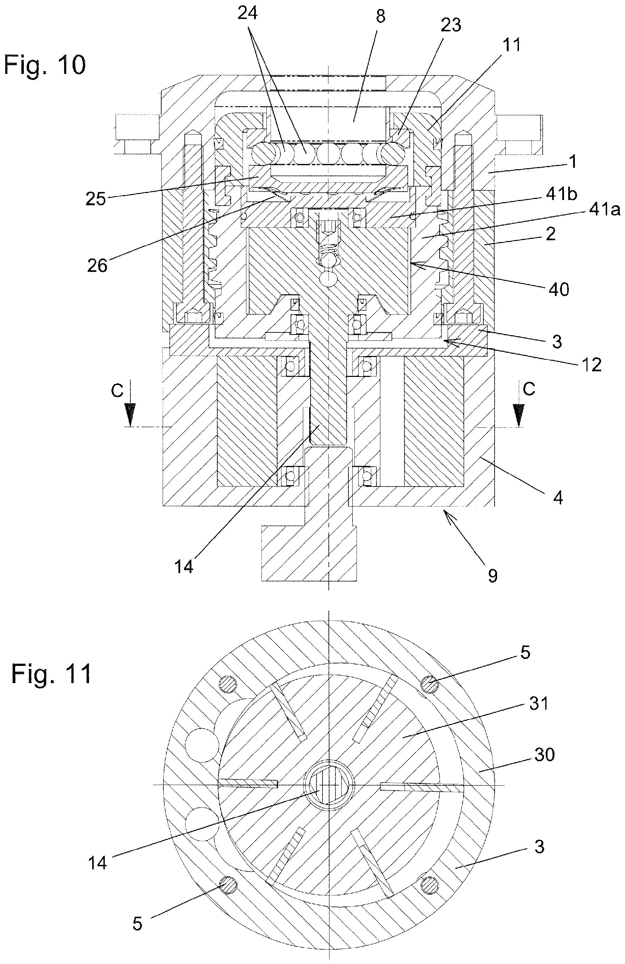

Ein weiteres Ausführungsbeispiel ist in den Fig. 10 und 11 dargestellt. Abgesehen von den im Folgenden beschriebenen Änderungen entspricht die Ausbildung dem des ersten Ausführungsbeispiels und die Beschreibung des ersten Ausführungsbeispiels ist entsprechend heranziehbar. Der Antriebsmotor 9 ist in diesem Ausführungsbeispiel als Pneumatikmotor ausgebildet. Der Rotor 31 ist hierbei axial unverschiebbar. Die Antriebswelle 14 ist mit dem Rotor 31 drehfest, aber axial verschiebbar verbunden.

Unterschiedliche Modifikationen der gezeigten Ausführungsbeispiele sind denkbar und möglich, ohne den Bereich der Erfindung zu verlassen, dessen Schutzbereich durch die Ansprüche bestimmt wird. So könnte beispielsweise das Schraubgetriebe auf andere Weise ausgebildet sein. Es könnte hierbei auch ein separates, mit dem Impulsaufnahmeteil drehschlüssig verbundenes Getriebeteil des Schraubgetriebes vorgesehen sein, welches eines der Gewinde des Schraubgetriebes aufweist. Dieses Getriebeteil oder auch das mit dem Außengewinde 60 versehene Impulsaufnahmeteil 41 könnte auch axial unverschiebbar gehalten sein und das andere Getriebeteil des Schraubgetriebes könnte axial verschiebbar sein, wobei es vom Gehäuse unverdrehbar gehalten und axial verschiebbar geführt sein könnte.

Denkbar und möglich wäre es auch, beim in den Fig. 1 bis 8 gezeigten Ausführungsbeispiel den Rotor 31 axial unverschiebbar auszubilden und eine axial verschiebbare Verbindung zwischen dem Rotor 31 und dem Drehteil 40 der Impulseinheit 12 vorzusehen.

Anstelle einer Aufnahme des Drehteils 40 in einem Aufnahmeraum 42 des Impulsaufnahmeteils 41 könnte auch das Impulsaufnahmeteil 41 in einem abgedichteten Aufnahmeraum des Drehteils 40 angeordnet sein. Die Dichtelemente 48 zwischen dem Drehteil 40 und dem Impulsaufnahmeteil 41 könnten auch in anderer Weise ausgebildet sein, beispielsweise lamellenförmig.

Der durch das axial verstellbare Spannelement 11 betätigte Spannmechanismus könnte auch in anderer Weise ausgebildet sein, beispielsweise könnten anstelle von Spannkugeln auch andere Eingriffselemente vorgesehen sein.

**Legende zu den Hinweisziffern:**

| | | | |
|---|---|---|---|
| 1 | Gehäuseteil | 27 | Öffnungsring |
| 1a | Schraubflansch | 27a | Vorsprung |
| 2 | Gehäuseteil | 28 | Längsmittelachse |
| 3 | Gehäuseteil | 30 | Stator |
| 4 | Gehäuseteil | 31 | Rotor |
| 5 | Schrauben | 32 | Permanentmagnet |
| 6 | Schrauben | 33 | Spule |
| 7 | Einzugsnippel | 34 | Öffnung |
| 7a | Ringnut | 35 | Längsmittelachse |
| 7b | Stufenfläche | 40 | Drehteil |
| 8 | Aufnahmeöffnung | 41 | Impulsaufnahmeteil |
| 9 | Antriebsmotor | 41a | Basisteil |
| 10 | Steuereinheit | 41b | Deckel |
| 11 | Spannelement | 42 | Aufnahmeraum |
| 12 | Impulseinheit | 43 | Dichtung |
| 13 | Schraubgetriebe | 44 | Dichtung |
| 14 | Antriebswelle | 45 | Kugellager |
| 15 | Mutter | 46 | Kugellager |
| 16 | Auslösestift | 47 | Haltering |
| 17 | Endschalter | 48 | Dichtelement |
| 18 | Halbring | 49 | Längsmittelachse |
| 19 | Halbring | 50 | Kanal |
| 20 | Steg | 51 | Kanal |
| 21 | Nut | 52 | Verbindungskanal |
| 22 | Nut | 53 | Feder |
| 23 | Spannring | 54 | Verschlusskörper |
| 23a | Schrägfläche | 60 | Außengewinde |
| 23b | Schulter | 61 | Innengewinde |
| 24 | Spannkugel | 62 | Dichtung |
| 25 | Auflagescheibe | 63 | Dichtung |
| 26 | Feder | | |

## Patentansprüche

1. Spannvorrichtung zum Einspannen eines Einzugsnippels (7), umfassend ein Spannelement (11), welches von einem Antriebsmotor (9) über ein Schraubgetriebe (13) zwischen einer Offenstellung, in der der Einzugsnippel (7) in eine Aufnahmeöffnung (8) der Spannvorrichtung einführbar und aus dieser herausziehbar ist, und einer Spannstellung, in welcher der in der Aufnahmeöffnung (8) eingeführte Einzugsnippel (7) in dieser gehalten ist, axial verstellbar ist, **dadurch gekennzeichnet, dass** die Spannvorrichtung eine Impulseinheit (12) mit einem mit dem Rotor (31) des Antriebsmotors (9) mechanisch gekoppelten Drehteil (40) aufweist, von welchem zur axialen Verstellung des Spannelements (11) über das Schraubgetriebe (13) pro Umdrehung zumindest einmal ein Drehimpuls auf ein Impulsaufnahmeteil (41) der Impulseinheit (12) übertragbar ist.

2. Spannvorrichtung nach Anspruch 1, **dadurch gekennzeichnet, dass** zur Ausbildung des Schraubgetriebes (13) das Impulsaufnahmeteil (41) ein Außengewinde (60) aufweist, welches mit dem Innengewinde (51) eines drehfest gehaltenen Teils, vorzugsweise eines Gehäuseteils (2), der Spannvorrichtung in Eingriff steht.

3. Spannvorrichtung nach Anspruch 1 oder 2, **dadurch gekennzeichnet, dass** das Spannelement (11) mit dem Impulsaufnahmeteil (41) axial unverschiebbar verbunden ist.

4. Spannvorrichtung nach einem der Ansprüche 1 bis 3, **dadurch gekennzeichnet, dass** der Rotor (31) des Antriebsmotors (9) mit dem Drehteil (40) der Impulseinheit (12) axial unverschiebbar verbunden ist und gegenüber dem Stator (30) des Antriebsmotors (9) axial verschiebbar ist.

5. Spannvorrichtung nach einem der Ansprüche 1 bis 4, **dadurch gekennzeichnet, dass** die mit dem Drehteil (40) der Impulseinheit (12) starr verbundene oder am Drehteil (40) angeformte Antriebswelle (14) oder ein mit dieser axial unverschiebbar verbundenes Teil mit einem Sensor zur Erfassung der axialen Lage des Drehteils (40) zusammenwirkt.

6. Spannvorrichtung nach einem der Ansprüche 1 bis 5, **dadurch gekennzeichnet, dass** der Antriebsmotor (9) ein bürstenloser Motor, vorzugsweise Außenläufermotor, ist, wobei der Rotor (31) Permanentmagneten (32) aufweist und die Permanentmagneten (32) eine größere axiale Ausdehnung als die Spulen (33) des Stators (30) aufweisen.

7. Spannvorrichtung nach einem der Ansprüche 1 bis 6, **dadurch gekennzeichnet, dass** das Impulsaufnahmeteil (41) einen abgedichteten Aufnahmeraum (42) aufweist, in dem das Drehteil (40) angeordnet ist und in dem eine Hydraulikflüssigkeit aufgenommen ist, wobei eine vom Rotor (31) des Antriebsmotors (9) angetriebene, das Drehteil (40) antreibende Antriebswelle (14) durch eine Öffnung in einem Boden des Impulsaufnahmeteils (41) abgedichtet in den Aufnahmeraum (42) durchgeführt ist.

8. Spannvorrichtung nach einem der Ansprüche 1 bis 7, **dadurch gekennzeichnet, dass** die Spannvorrichtung einen Spannring (23) aufweist, der eine Schrägfläche (23a) aufweist, mit der Spannkugeln (24) zusammenwirken, wobei der Spannring (23) in der Spannstellung des Spannelements (11) vom Spannelement (11) gegen die Spannkugeln (24) beaufschlagt ist und diese in eine Ringnut (7a) des Einzugsnippels (7) drückt.

9. Spannvorrichtung nach Anspruch 8, **dadurch gekennzeichnet, dass** auf der von der Impulseinheit (12) abgelegenen Seite der Spannkugeln (24) ein Öffnungsring (27) angeordnet ist, wobei der Öffnungsring (27) in der Offenstellung des Spannelements (11) die Spannkugeln (24) aus der Ringnut (7a) des Einzugsnippels (7) herausdrückt.

10. Spannvorrichtung nach Anspruch 8 oder 9, **dadurch gekennzeichnet, dass** die Spannkugeln (24) auf der der Impulseinheit (12) zugewandten Seite auf einer Auflagescheibe (25) aufliegen, die von einer Feder (26) gegen die Spannkugeln (24) vorgespannt ist.

## Claims

1. A clamping device for clamping an intake nipple (7), comprising a clamping element (11) which is axially adjustable by a drive motor (9) by way of a screw mechanism (13) between an open position, in which the intake nipple (7) can be introduced into a receiving opening (8) of the clamping device and can be withdrawn therefrom, and a clamping position, in which the intake nipple (7) introduced into the receiving opening (8) is held therein, **characterised in that** the clamping device has a pulse unit (12) with a rotary part (40) which is mechanically coupled to the rotor (31) of the drive motor (9), from which rotary part, for axial adjustment of the clamping element (11) by way of the screw mechanism (13), a rotary pulse can be transmitted at least once per revolution to a pulse-receiving part (41) of the pulse unit (12).

2. A clamping device according to claim 1, **characterised in that** in order to form the screw mechanism (13) the pulse-receiving part (41) has an external thread (60) which is engaged with the internal thread (51) of a non-rotatably held part, preferably a housing part (2), of the clamping device.

3. A clamping device according to claim 1 or 2, **characterised in that** the clamping element (11) is connected axially non-displaceably to the pulse-receiving part (41).

4. A clamping device according to one of claims 1 to 3, **characterised in that** the rotor (31) of the drive motor (9) is connected axially non-displaceably to the rotary part (40) of the pulse unit (12) and is axially displaceable relative to the stator (30) of the drive motor (9).

5. A clamping device according to one of claims 1 to 4, **characterised in that** the drive spindle (14) which is rigidly connected to the rotary part (40) of the pulse unit (12) or formed on the rotary part (40), or a part connected axially non-displaceably to said drive spindle, cooperates with a sensor for acquiring the axial position of the rotary part (40).

6. A clamping device according to one of claims 1 to 5, **characterised in that** the drive motor (9) is a brushless motor, preferably external rotor motor, the rotor (31) having permanent magnets (32) and the permanent magnets (32) having a greater axial extent than the coils (33) of the stator (30).

7. A clamping device according to one of claims 1 to 6, **characterised in that** the pulse-receiving part (41) has a sealed receiving space (42) in which the rotary part (40) is arranged and in which a hydraulic fluid is received, with a drive spindle (14) driven by the rotor (31) of the drive motor (9) and driving the rotary part (40) being passed in a sealed-off manner into the receiving space (42) through an opening in a base of the pulse-receiving part (41).

8. A clamping device according to one of claims 1 to 7, **characterised in that** the clamping device has a clamping ring (23) which has an inclined face (23a) with which clamping spheres (24) cooperate, the clamping ring (23) in the clamping position of the clamping element (11) being urged by the clamping element (11) against the clamping spheres (24) and pressing them into an annular groove (7a) of the intake nipple (7).

9. A clamping device according to claim 8, **characterised in that** an aperture ring (27) is arranged on that side of the clamping spheres (24) that is located remote from the pulse unit (12), the aperture ring (27) in the open position of the clamping element (11) pushing the clamping spheres (24) out of the annular groove (7a) of the intake nipple (7).

10. A clamping device according to claim 8 or 9, **characterised in that** the clamping spheres (24) on the side facing the pulse unit (12) lie on a bearing disc (25) which is prestressed against the clamping spheres (24) by a spring (26).

## Revendications

1. Dispositif de serrage pour serrer un raccord d'insertion (7), comprenant un élément de serrage (11) qui peut être déplacé axialement par un moteur d'entraînement (9) par l'intermédiaire d'un engrenage hélicoïdal (13) entre une position ouverte, dans laquelle le raccord d'insertion (7) peut être introduit dans une ouverture de réception (8) du dispositif de serrage et retiré de celle-ci, et une position de serrage, dans laquelle le raccord d'insertion (7) introduit dans l'ouverture de réception (8) est maintenu dans celle-ci, **caractérisé en ce que** le dispositif de serrage est muni d'une unité d'impulsion (12) avec une pièce rotative (40) couplée mécaniquement au rotor (31) du moteur d'entraînement (9), de laquelle une impulsion de rotation peut être transmise au moins une fois par tour à une pièce de réception d'impulsion (41) de l'unité d'impulsion (12) pour régler axialement l'élément de serrage (11) par l'intermédiaire de l'engrenage hélicoïdal (13).

2. Dispositif de serrage selon la revendication 1, **caractérisé en ce que,** pour former l'engrenage hélicoïdal (13), la pièce de réception d'impulsions (41) est munie d'un filetage extérieur (60) qui est en prise avec le filetage intérieur (51) d'une pièce maintenue fixe en rotation, de préférence une pièce de boîtier (2), du dispositif de serrage.

3. Dispositif de serrage selon la revendication 1 ou 2, **caractérisé en ce que** l'élément'de serrage (11) est relié à la pièce de réception d'impulsions (41) de manière à ne pas pouvoir se déplacer axialement.

4. Dispositif de serrage selon l'une des revendications 1 à 3, **caractérisé en ce que** le rotor (31) du moteur d'entraînement (9) est relié à la pièce rotative (40) de l'unité d'impulsion (12) de manière à ne pas pouvoir se déplacer axialement et peut se déplacer axialement par rapport au stator (30) du moteur d'entraînement (9).

5. Dispositif de serrage selon l'une des revendications 1 à 4, **caractérisé en ce que** l'arbre d'entraînement (14) relié rigidement à la pièce rotative (40) de l'unité d'impulsion (12) ou formé sur la pièce rotative (40), ou une pièce reliée à celle-ci de manière à ne pas pouvoir se déplacer axialement, coopère avec un capteur pour détecter la position axiale de la pièce rotative (40).

6. Dispositif de serrage selon l'une des revendications 1 à 5, **caractérisé en ce que** le moteur d'entraînement (9) est un moteur sans balai, de préférence un moteur à induit extérieur, le rotor (31) étant muni d'aimants permanents (32), et les aimants permanents (32) présentant une extension axiale supérieure à celle des bobines (33) du stator (30).

7. Dispositif de serrage selon l'une des revendications 1 à 6, **caractérisé en ce que** la pièce de réception d'impulsions (41) est munie d'un logement étanche (42) dans lequel est disposée la pièce rotative (40) et dans lequel est reçu un fluide hydraulique, un arbre d'entraînement (14) entraîné par le rotor (31) du moteur d'entraînement (9) et entraînant la pièce rotative (40) étant passé de manière étanche dans le logement (42) à travers une ouverture dans un fond de la pièce de réception d'impulsions (41).

8. Dispositif de serrage selon l'une des revendications 1 à 7, **caractérisé en ce que** le dispositif de serrage est muni d'une bague de serrage (23) munie d'une surface inclinée (23a) avec laquelle coopèrent des billes de serrage (24), la bague de serrage (23) étant sollicitée par l'élément de serrage (11) contre les billes de serrage (24) dans la position de serrage de l'élément de serrage (11) et poussant celles-ci dans une rainure annulaire. (7a) du raccord d'insertion (7).

9. Dispositif de serrage selon la revendication 8, **caractérisé en ce qu'**une bague d'ouverture (27) est disposée sur le côté des billes de serrage (24) qui est opposé à l'unité d'impulsion (12), la bague d'ouverture (27) poussant les billes de serrage (24) hors de la rainure annulaire (7a) du raccord d'insertion (7) lorsque l'élément de serrage (11) est en position ouverte.

10. Dispositif de serrage selon la revendication 8 ou 9, **caractérisé en ce que** sur le côté tourné vers l'unité d'impulsion (12), les billes de serrage (24) reposent sur un disque d'appui (25) qui est précontraint par un ressort (26) contre les billes de serrage (24).
